# EUROPÄISCHE PATENTSCHRIFT

(11) **EP 3 266 651 B1**
(45) Veröffentlichungstag und Bekanntmachung des Hinweises auf die Patenterteilung: **20.11.2019**
(21) Anmeldenummer: 16001627.5
(22) Anmeldetag: 25.07.2016
(51) Int. Cl.: B60P 7/15

(54) **VORRICHTUNG ZUM SICHERN VON LADEGUT**
DEVICE FOR SECURING LOADS
DISPOSITIF DE SECURISATION DE MATERIAUX DE CHARGEMENT

(30) Priorität: 26.08.2015 DE 102015010972; 12.07.2016 DE 102016008381
(43) Veröffentlichungstag der Anmeldung: 10.01.2018
(73) Patentinhaber: Suer Nutzfahrzeugtechnik GmbH & Co. KG, 42929 Wermelskirchen (DE)
(72) Erfinder: Suer, Peter, 42929 Wermelskirchen (DE)
(74) Vertreter: Müller, Enno

(56) Entgegenhaltungen:
- DE-A1- 10 145 416
- US-A- 6 062 780

## Beschreibung

Die Erfindung betrifft eine Vorrichtung zum Sichern von Ladegut nach Oberbergriff des Hauptanspruchs.

Derartige Vorrichtungen sind bekannt. Über der Internetseite www.suer.de sind beispielsweise Vorrichtungen nach dem Oberbegriff des Hauptanspruchs erhältlich, die einen Schwenkkopf bzw. Rastkopf aufweisen, welcher von zwei Blechschenkeln gebildet wird, die mit sich gegenüberliegenden Seiten gegeneinandergerichtet sind.

Die gattungsgemäße DE 101 45 416 A1 beschreibt eine Vorrichtung zum Sichern von Ladegut auf der Ladefläche eines Fahrzeugs in Form eines balkenartigen Profils mit einer Profilachse. An einem Ende des balken- oder rohrartigen Profils ist ein Schwenkkopf angelenkt, der an einer im Abstand zum Profil verlaufenden Firstplatte mit einem diese durch eine Klinkenöffnung durchsetzenden und relativ zu ihr bewegbaren Einsatzelement für eine Rastausnehmung an einem Kastenaufbau versehen ist.

Aus der US 6, 062, 780 A ist eine Vorrichtung zum Aufstapeln von Ladegut bekannt, welche ein balkenartiges Profil mit Schwenkkopf bzw. Rastkopf aufweist. Der Rastkopf ist um eine Schwenkachse schwenkbar und weist als Rastelement eine um eine Drehachse drehbare Klinke mit Eingreifnoppen auf. Die Klinke ist von einer Eingreifstellung, in welcher der Eingreifnoppen in einer als Gegenrastelement ausgeführten Rastausnehmung eingreift, entgegen einer Federkraft in eine aus der Rastausnehmung herausgeführten Entriegelungsstellung verschwenkbar.

Die Aufgabe der vorliegenden Erfindung besteht darin, eine Vorrichtung der eingangs genannten Art zu entwickeln, welche mit verringertem Fertigungsaufwand und einer höheren Sicherheit zur Einhaltung von vorbestimmten Qualitätvorgaben herstellbar ist.

Diese Aufgabe löst die Erfindung mit den Merkmalen des Hauptanspruchs.

Bei Rastköpfen aus Blechschenkeln, wie sie über der oben genannten Internetseite www.suer.de erhältlich sind, sind die besagten sich gegenüberliegenden Blechschenkel für gewöhnlich entgegen ihren jeweiligen Seiten, mit welchen sie gegeneinander gerichtet sind, zu einer Oberkante des Blechschenkels gehend nach außen abgewinkelt, um dem Rastkopf -in Seitenansicht gesehen- ein T-förmiges Profil zu geben, mit welchem der Rastkopf in ein C-förmiges Schienenprofil einhängbar ist.

Hierbei hat die Erfindung erkannt, dass solche Rastköpfe mit geringerem Aufwand und mit erhöhter Sicherheit zur Einhaltung von festgelegten Qualitätsvorgaben gefertigt werden können, wenn die jeweils linken und rechten Blechschenkel einheitlich und damit für ihr Zusammenbau zu dem Rastkopf untereinander austauschbar gestaltet werden.

Erfindungsgemäß wird eine Reduzierung des Fertigungsaufwandes und eine erhöhte Sicherheit zur Einhaltung von festgelegten Qualitätsvorgaben erreicht, indem die Blechschenkel von Ausstanzteilen gebildet werden, die zunächst einmal flach und bezüglich einer Spiegelachse spiegelsymmetrisch und zueinander deckungsgleich ausgeführt sind. Die Ausstanzteile sind erfindungsgemäß bezüglich derjenigen Spiegelachse spiegelsymmetrisch, welche in derjenigen quer zur Fahrtrichtung des Fahrzeugs gelegenen Vertikalebene liegt, in welcher auch die Schwenkachse des Rastkopfes liegt.

Durch die symmetrische Formgebung kann unabhängig davon, ob ein jeweiliger als Ausstanzteil vorliegender Blechschenkel als linker oder rechter Blechschenkel eingesetzt werden soll, diesem vor seinem Abwinkeln jeweils die gleiche Vorder- bzw. Rückseite zugewiesen werden, wie seinem jeweils gegenüberliegenden Blechschenkel. Hierdurch kann insbesondere sichergestellt werden, dass nach dem Zusammenbau der Blechschenkel zu dem Rastkopf ihre jeweiligen gegenüberliegenden Seiten und ihre jeweiligen nach außen gerichteten Seiten von gleicher Oberflächenbeschaffenheit bzw. Oberflächengüte sind.

Ein weiterer Vorteil der Erfindung liegt insbesondere darin, dass für die Fertigung des rechten und des linken Blechschenkels derselbe Fertigungsprozess herangezogen werden kann, wodurch sich eine zusätzliche Sicherheit zur Einhaltung einer vorbestimmten, einheitlichen Maßhaltigkeit der Blechschenkel nach ihrem Abwinkeln ergibt. Hierdurch kann für das Einsetzen des erfindungsgemäß hergestellten Rastkopfes in eine C-förmige Schiene ein klemmungsfreier Sitz bzw. eine klemmungsfreie Führung des Rastkopfes in der Schiene sichergestellt werden.

Um an den Blechschenkeln für die Schwenkachse und für die Drehachse der Klinke Bohrungen vorzusehen, die unabhängig davon, welcher Blechschenkel als linker oder rechter Blechschenkel des Rastkopfes verwendet wird, koaxial zueinander angeordnet sind, wenn die Blechschenkel mit ihren Seiten gegeneinander gerichtet sind, schlägt die Erfindung vor, dass jeder Blechschenkel einen ersten, auf der Spiegelachse gelegenen Durchbruch zur Anbringung der Schwenkachse aufweisen. In Überdeckung gebrachte Blechschenkel weisen so stets zwei koaxial zueinander angeordnete Bohrungen auf, durch die die Schwenkachse durchgeführt werden kann. Ergänzend hierzu weist jeder Blechschenkel zwei zweite, außerhalb der Spiegelachse gelegenen Durchbrüche auf, von denen in der Gebrauchsstellung des Rastkopfes lediglich einer zur Anbringung der Drehachse dient.

Die jeweiligen Durchbrüche werden erfindungsgemäß bereits beim Ausstanzen gebildet. Hieraus ergibt sich, dass aufgrund der spiegelbildlichen Ausführung der beiden Blechschenkel auf jedem Blechschenkel zwei zueinander spiegelbildlich angeordnete Durchbrüche vorhanden sind, die jeweils der Drehachse der Klinke zugeordnet werden können, so dass sich bei in Überdeckung befindlichen Blechschenkeln, stets ein Durchbruch-Paar bildet, dessen Durchbrüche sich koaxial überdecken, so dass durch die Durchbrüche eine Drehachse für die Klinke hindurchsteckbar ist.

Die Erfindung schlägt vor, dass die Ausstanzteile zu den Blechschenkeln zur Einnahme einer untereinander deckungsgleichen Form fertig gebogen sind, indem sie oberhalb des Durchbruches zur Anbringung der Drehachse unter einem für jeden Blechschenkel gleichen, vorbestimmten Längenmaß entgegen ihrer jeweiligen Seite, welche dem anderen Blechschenkel zugewandt ist, zu ihrer Oberkante des Ausstanzteils gehend nach außen abgewinkelt sind. Ergänzend hierzu schlägt die Erfindung vor, dass die Blechschenkel im Bereich des Durchbruches zur Anbringung der Schwenkachse unter einem für jeden Blechschenkel gleichen, vorbestimmten Vorsprungmaß entgegen ihrer jeweiligen Seite, welche dem anderen Blechschenkel zugewandt ist, zur Unterkante des Ausstanzteils gehend nach außen gekröpft sind.

Vorzugsweise ist das Längenmaß größer als das Vorsprungmaß. Das größere Längenmaß wirkt sich vorteilhaft beim Abwinkeln aus, weil so insbesondere sichergestellt werden kann, dass beim Abwinkeln ein Mindestbiegeradius zumindest erreicht aber eher sogar übertroffen werden kann, so dass eine Rissbildung im Biegematerial beim Abwinkeln mit Sicherheit vermieden wird.

Um die Blechschenkel sicher und mit geringem Aufwand miteinander zu verbinden, schlägt die Erfindung vor, dass die Blechschenkel mittels zweier Abstandshülsen auf Abstand gehalten werden, welche jeweils einem der Durchbrüche für die Schwenk- bzw. Drehachse zugeordnet sind, wobei über eine durch den jeweiligen Durchbruch für die Drehachse, und deren zugeordneten Abstandshülse durchführbare Spannschraube die Blechschenkel miteinander verspannbar sind. Dabei schlägt die Erfindung vor, dass die Länge der Abstandshülse, welche dem jeweiligen Durchbruch für die Schwenkachse zugeordnet ist, der vorbestimmten Länge der Schwenkachse entspricht.

Um sicherzustellen, dass die beiden miteinander verspannten Blechschenkel in Seitenansicht gesehen parallel zueinander ausgerichtet sind , so dass eine maßhaltig genaue, T-förmige Anordnung der Blechschenkel zueinander begünstigt wird, mit welcher der erfindungsgemäße Rastkopf in ein zugeordnetes C-förmiges Schienenprofil verkantungsfrei einsetzbar ist, schlägt die Erfindung vor, dass die Länge der Abstandshülse, welche dem Durchbruch für die Drehachse zugeordnet ist, dem Maß des Zwischenraums entspricht, welcher von den Blechschenkeln beim Einfassen der Klinke gebildet wird, wenn diese unter Einfassung der dem Durchbruch für die Schwenkachse zugeordneten Abstandshülse zueinander parallel ausgerichtet sind.

Durch die obigen Maßgaben werden die Blechschenkel mit ihren gegeneinander gerichteten Seiten beim Verspannen automatisch über die Längen der Abstandshülsen parallel zueinander ausgerichtet. Der Zusammenbau erfolgt hierdurch mit einer erhöhten Sicherheit zur Einhaltung von festgelegten Qualitätsvorgaben. Zudem erfolgt der Zusammenbau des Rastkopfes in einer einfachen, aufwandsarmen Weise, da nur wenige Teile hierfür benötigt werden.

Ergänzend hierzu schlägt die Erfindung vor, dass die Blechschenkel einen auf der Spiegelachse gelegenen Durchbruch zur Anbringung einer Achse für eine Schenkelfeder aufweisen, welcher zwischen dem Durchbruch für die Schwenkachse und dem Durchbruch für die Drehachse liegt.

Erfindungsgemäß wird zur Bildung der Achse für die Schenkelfeder eine Spannschraube verwendet, die im zusammengebauten Zustand des Rastkopfes durch die jeweiligen Durchbrüche für die Schenkelfeder-Achse durchführbar ist. Hierdurch können die Spannkräfte von der Spannschraube der Drehachse, die die Blechschenkel gegen die Abstandshülsen spannen, erhöht werden, um insbesondere die Abstandshülse, welche der Schwenkachse zugeordnet ist, allein über die Spannkräfte, die durch die besagten Spannschrauben hervortreten, zwischen den Blechschenkeln zu halten. Mit dieser Maßnahme kann die Montage des Rastkopfes am balkenartigen Profil erleichtert werden.

Vorzugsweise weist die Schenkelfeder einen ersten Schenkel auf, mit welchem sie sich auf der Schwenkachse abstützt und einen zweiten Schenkel auf, mit welchem sie sich auf einer Unterseite der Klinke abstützt.

Um der Klinke eine vordefinierte Eingreifstellung und ebenso eine vordefinierte Entriegelungsstellung vorzugeben, schlägt die Erfindung vor, dass die Klinke zumindest an einer ihrer von den Blechschenkeln eingefassten Seiten einen nach außen gerichteten Anschlagszapfen aufweist, welcher gegen eine Schmalseite des Blechschenkels, bzw. gegen eine Kante des Blechschenkels gerichtet ist. Dabei sieht die Erfindung vor, dass die Klinke in der Eingreifstellung gegen eine vorbestimmte erste Stelle der Schmalseite des Blechschenkels anliegt und in der Entriegelungsstellung gegen eine vorbestimmte zweite Stelle der Schmalseite anliegt.

Beim Wechsel der Klinke von der Eingreifstellung in die Entriegelungsstellung und umgekehrt, bewegt sich der Anschlagszapfen auf einer kreisförmigen Bahn. Hierbei hat die Erfindung erkannt, dass zur Bewegung der Klinke mit Anschlagszapfen, die dem Anschlagszapfen gegenüberliegende Schmalseite zumindest soweit zwischen den Stellungen vom Anschlagszapfen zurückspringen muss, wie sein halber Durchmesser groß ist, um ein verkantungsfreies Verschwenken der Klinke zu ermöglichen.

Vorzugsweise weist die Klinke an beiden von den Blechschenkeln eingefassten Seiten den Anschlagszapfen auf, um ein Verkanten der Klinke beim Wechsel zwischen den jeweiligen Stellungen zu vermeiden.

Die Erfindung schlägt vor, die Klinke mit Anschlagszapfen als Gussteil auszubilden. Dabei weist vorzugsweise der Eingreifnoppen der Klinke eine nach oben offene Mulde auf. Diese Maßnahme soll insbesondere einen möglichst gleichbleibenden Wandstärkenverlauf für das Gussteil begünstigen. Darüberhinaus stellt sich hierbei überraschend der Vorteil ein, dass die Mulde als Rast- bzw Gegenrastelement für ein entsprechendes Gegen- bzw. Rastelement am Fahrzeug genutzt werden kann, in welchem die Mulde in der Raststellung des Eingreifnoppens eingreift.

Eine in Rede stehende Vorrichtung kann beispielsweise zum Sichern von Getränkepaletten oder von Paletten mit anderweitig bestücktem Ladegut eingesetzt werden. Hierbei hat sich in der Praxis die Vorgehensweise bewährt, dass man die Vorrichtung mit ihrem Rastkopf in Gegenrastelementen einrastet, die sich an einer Decke des Fahrzeugs befinden. Zum Sichern der Getränkepaletten, wird der jeweilige Balken der Vorrichtung senkrecht zum Fahrzeugboden gestellt. Beim Entladen der Paletten wird der jeweilige Balken waagerecht gegen die Decke des Fahrzeugs verschwenkt und dort z.B. mittels einer Schlaufe an der Decke gegen ein Herabschwenken gesichert. Der Rastkopf bleibt im eingerasteten Zustand an der Decke. Hierzu weist das balkenartige Profil an demjenigen Ende, an welchem der Rastkopf befestigt ist, einen zum jeweiligen Ende offenen Ausschnitt auf, in welchem der Rastkopf zusammen mit der Klinke einsenkbar ist.

Die Erfindung hat erkannt, dass es bei der erfindungsgemäß spiegelbildlichen Ausführung der Blechschenkel von Vorteil ist, wenn die Schwenkachse des Rastkopfes aus der Längsmittelachse des balkenartigen Profils in Richtung zum Ausschnitt versetzt angeordnet wird, da ihm so eine bevorzugte Schwenkrichtung in Richtung zum Ausschnitt vorgegeben werden kann.

Im Folgenden wird die Erfindung an Hand eines Ausführungsbeispieles näher erläutert.

Es zeigen:
- Fig.1: ein erfindungsgemäßer Rastkopf in Seitenansicht in der Eingreifstellung;
- Fig.2: den Rastkopf gem Fig.1 in Frontansicht;
- Fig.3: den Rastkopf gem. Fig.1 in der Entriegelungsstellung, Seitenansicht;
- Fig.4: die erfindungsgemäße Vorrichtung in einer Sicherungsstellung;
- Fig.5: eine Detaildarstellung des Rastkopfes bezüglich einer quer zur Fahrtrichtung des Fahrzeugs gelegenen Vertikalebene;
- Fig.6: die Vorrichtung gem. Fig.4 in einer Entladestellung;
- Fig.7: eine Detaildarstellung des Rastkopfes gem. Fig.6;
- Fig.8: eine weitere Ausführungsform der Erfindung mit einer getrieblichen Koppelvorrichtung zur Betätigung der Klinke;
- Fig.9: eine zweite Ausführungsform einer Koppelvorrichtung zur Betätigung der Klinke.

Sofern im Folgenden nichts anderes gesagt ist, gilt die folgende Beschreibung stets für alle Figuren.

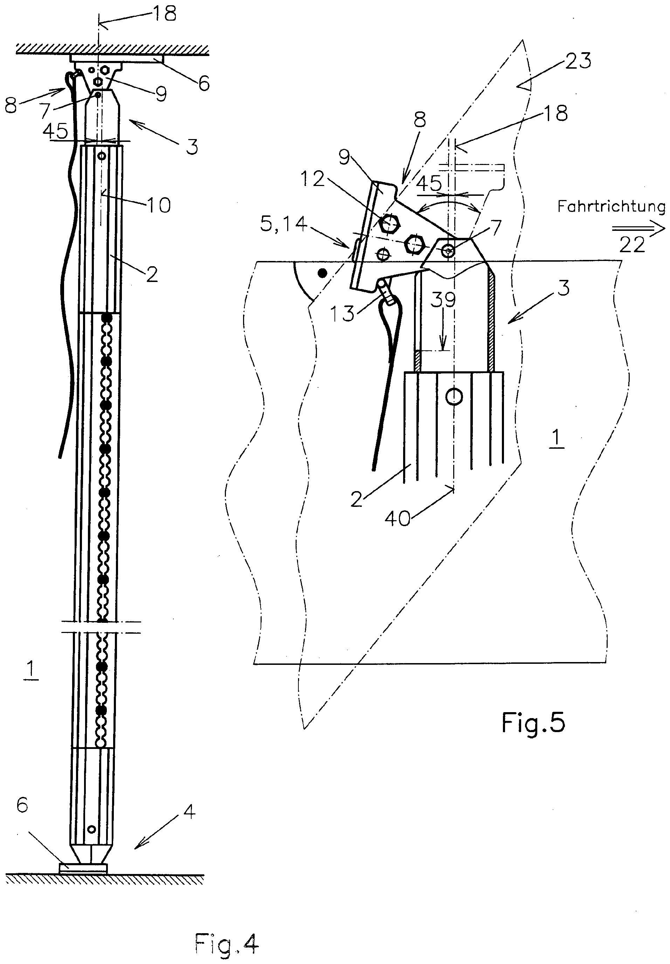

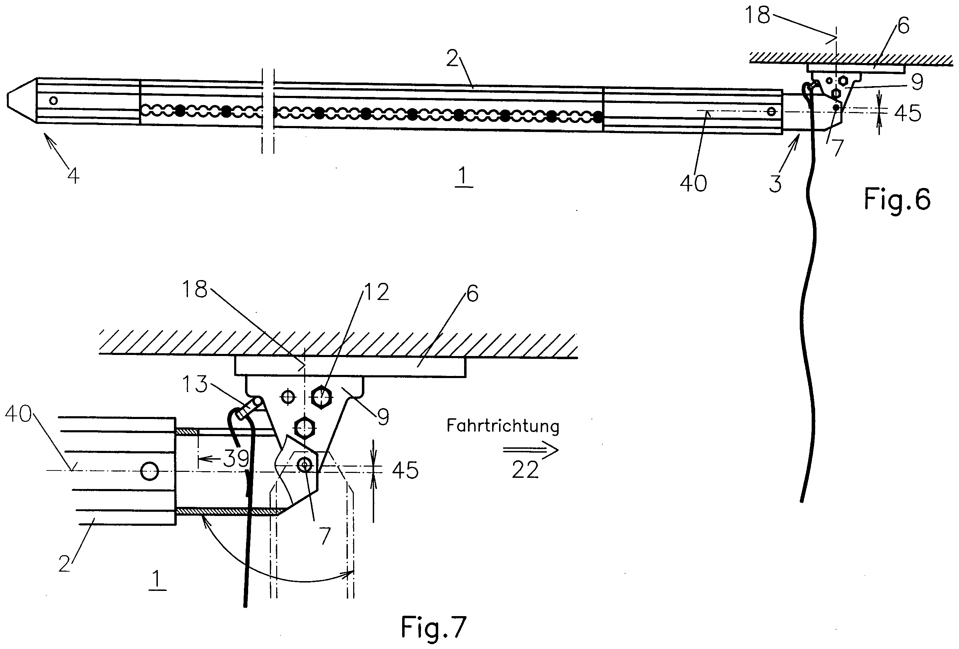

Insbesondere die Fig.4 und 6 zeigen eine erfindungsgemäße Vorrichtung 1 zum Sichern von Ladegut, welches sich auf einer Ladefläche eines Fahrzeugs befindet. Die Vorrichtung besteht aus einem balkenartigen Profil 2 mit einem ersten und einem zweiten Ende 3,4.

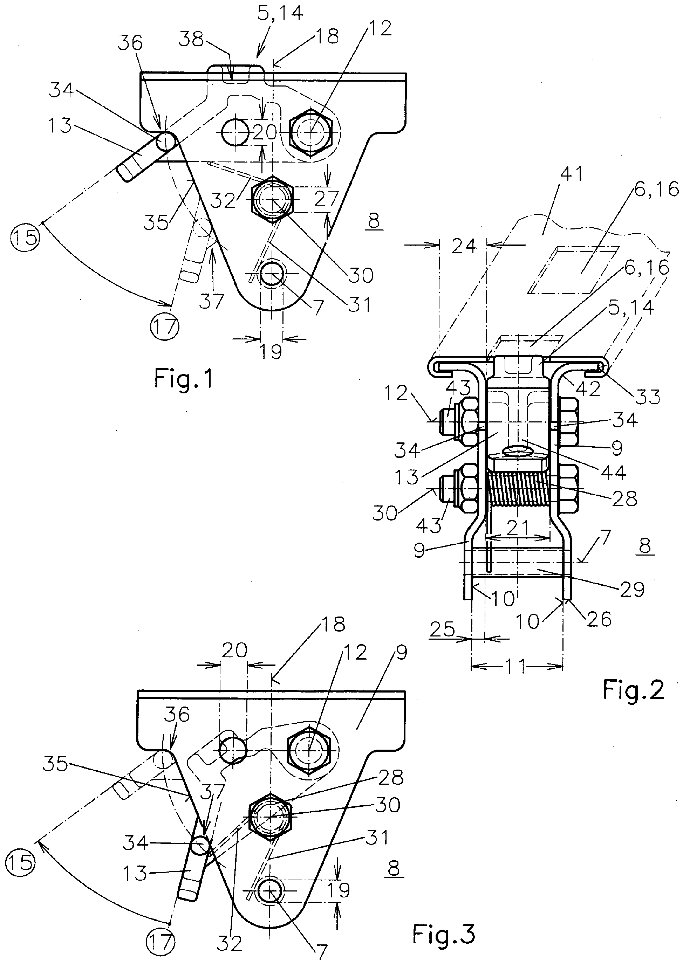

Insbesondere die Fig.1 bis 3 und Fig.5 zeigen, dass die jeweiligen Enden 3,4 Rastelemente 5 aufweisen, mit welchem sie in Gegenrastelemente 6 arretierbar sind, die dem Fahrzeug zugeordnet sind. Insbesondere Fig.3 zeigt, dass zumindest eines der Enden 3,4 einen um eine Schwenkachse 7 schwenkbaren Rastkopf 8 aufweist, welcher von zwei Blechschenkeln 9 gebildet wird, die mit sich gegenüberliegenden Seiten 10 gegeneinander gerichtet sind und über eine vorbestimmte Länge 11 der Schwenkachse 7 voneinander beabstandet sind. Die Blechschenkel 9 sind von einer Oberkante 33 des jeweiligen Blechschenkels 9 kommend nach außen weisend abgewinkelt, um den Rastkopf 8 -in Seitenansicht gesehen- ein T-förmiges Profil zu geben, mit welchem der Rastkopf 8 in ein C-förmiges Schienenprofil 41 einhängbar bzw. einführbar ist.

Weiterhin stellt insbesondere Fig.3 dar, dass der jeweils linke und der rechte Blechschenkel 9 einen Zwischenraum 21 bilden, mit welchem sie eine um eine Drehachse 12 drehbare Klinke 13 mit Eingreifnoppen 14 einfassen, welche dem Rastkopf 8 als Rastelement 5 zugeordnet ist.

Insbesondere die Fig.1 und 3 zeigen in Verbindung mit Fig.3, dass die Klinke 13 von einer Eingreifstellung 15, in welcher der Eingreifnoppen 14 in einer als Gegenrastelement 6 ausgeführten Rastausnehmung 16 eingreift, entgegen einer Federkraft in eine aus der Rastausnehmung 16 herausgeführten Entriegelungsstellung 17 verschwenkbar ist. Die Rastausnehmung 16 wird von Löchern gebildet, die in der C-förmigen Schiene 41 in ihrer Längsrichtung in vorbestimmten Abständen aufeinander folgend angeordnet sind.

Insbesondere die Fig. 4,6 und 7 zeigen, dass die C-förmige Schiene 41 an der Innenwandung des Fahrzeugdaches angebracht ist. Die Vorrichtung 1 ist mit ihrem ersten Ende 3 über den Rastkopf 8 in der C-förmigen Schiene 41 eingerastet. In Fig. 4 ist zu sehen, dass das balkenartige Profil 2 senkrecht steht, um Ladung zu sichern. Hierzu ist das balkenartige Profil in bekannter Weise als zweigeteiltes Profil ausgeführten und wird von einem unteren und einem oberen Profilteil gebildet, die teleskopartig ineinander versenkt und über eine Feder -nicht dargestellt- gegeneinander unter Vorspannung stehen, so dass das zweite Ende 4 gegen den Fahrzeugboden gedrückt wird. Das zweite Ende 4 weist ebenfalls wie das erste Ende 3 Rastelemente 5 auf, mit welchen es in Gegenrastelemente 6 eingerastet ist, die sich am Fahrzeugboden befinden.

Zur Einnahme einer Entladestellung der Vorrichtung 1, dargestellt in Fig.6., kann das balkenartige Profil 2 mit dem unteren Profilteil, mit welchem es gemäß Fig.4 im Gegenrastelement 6 des Fahrzeugboden eingerastet ist, entgegen der Federkraft aus seiner Arretierung gehoben werden und zur Einnahme der Entladestellung in eine zur Fahrzeugdecke waagerechten Position verschwenkt werden. Dabei verbleibt der Rastkopf 8 in seine eingerasteten Position. Damit das balkenartige Profil 2 die waagerechte Position einnehmen kann, weist das balkenartige Profil 2 an demjenigen Ende 3, an welchem der Rastkopf 8 befestigt ist, einen zum jeweiligen Ende 3 offenen Ausschnitt 39 auf, in welchem der Rastkopf 8 zusammen mit der Klinke 13 einsenkbar ist.

Erfindungsgemäß werden die Blechschenkel 9 von Ausstanzteilen 9 gebildet, die zunächst flach und bezüglich derjenigen Spiegelachse 18 spiegelsymmetrisch und zueinander deckungsgleich ausgeführt sind, welche in derjenigen quer zur Fahrtrichtung 22 gelegenen Vertikalebene 23 liegt, in welcher auch die Schwenkachse 7 liegt. Dieser Sachverhalt wird insbesondere anhand von Fig.5 dargestellt.

Insbesondere die Fig.1 und 2 zeigen, dass jeder Blechschenkel 9 einen ersten, auf der Spiegelachse 18 gelegenen Durchbruch 19 zur Anbringung der Schwenkachse 7 und zwei zweite, außerhalb der Spiegelachse 18 gelegene Durchbrüche 20 aufweist, von denen in der Bgebrauchsstellung des Rastkopfes 8 lediglich einer zur Anbringung der Drehachse 12 dient. Aufgrund der Symmetrieeigenschaften der Blechschenkel 9 ergeben sich somit auf jedem Blechschenkel 9 zwei Durchbrüche 20, die wahlweise zur Anbringung der Drehachse 12 genutzt werden können. Die Durchbrüche 19, 20 auf dem linken, bzw. rechten Blechschenkel 9 sind jeweils zu den Durchbrüchen 19, 20 auf dem rechten, bzw. linken Blechschenkel 9 koaxial ausgerichtet, da die Blechschenkel deckungsgleich ausgeführt und entsprechend ausgerichtet sind. Somit können durch die jeweiligen Durchbrüche 19, 20 die jeweils zugeordnete Schwenkachse 7 und die jeweils zugeordnete Drehachse 12 durchgeführt werden.

Insbesondere Fig.3 stellt nachvollziehbar dar, dass die Ausstanzteile zu den Blechschenkeln 9 unter Einnahmen einer deckungsgleichen Form fertig gebogen sind, indem sie oberhalb des Durchbruchs 20 zur Anbringung der Drehachse 12 unter einem vorbestimmten, gemeinsamen Längenmaß 24 entgegen ihrer jeweiligen Seite 10 zu ihrer Oberkante 33 des Ausstanzteils gehend nach außen unter einem zur Seite 10 stehenden rechten Winkel abgewinkelt sind. Weiterhin sind die Blechschenkel 9 im Bereich des Durchbruches 19 zur Anbringung der Schwenkachse 7 unter einem vorbestimmten, gemeinsamen Vorsprungmaß 25 entgegen ihrer jeweiligen Seite 10 zur Unterkante 26 des Ausstanzteils 9 gehend nach außen gekröpft. Dabei ist das Längenmaß 24 größer als das Vorsprungmaß 25. Der Biegeradius 42 liegt über den materialspezifischen Mindestbiegeradius des jeweiligen Blechschenkels 9, unter welchem keine Rissbildungen beim Abwinkeln entstehen.

Aus der Erfindung ergibt sich der wesentliche Vorteil, dass beide Blechschenkel 9 sowohl als linker als auch als rechter Blechschenkel 9 eingesetzt werden können, wodurch sich die Montage des Rastkopfes aufwandsärmer gestaltet. Zudem können mit der Erfindung festgelegte Qualitätsansprüche an die Fertigung des Rastkopfes in verbesserter Weise sichergestellt werden.

Die fertig gebogenen Blechschenkel 9 sind parallel zueinander ausgerichtet, indem die Blechschenkel 9 mittels zweier Abstandshülsen 29 auf Abstand gehalten werden. Die Abstandshülsen 29 sind jeweils einem der Durchbrüche 19, 20 zugeordnet. Die Blechschenkel 9 sind über eine durch die jeweilgen Durchbrüche 20 für die Drehachse 12 und deren zugeordneten Abstandshülse 29 durchführbare Spannschraube miteinander verspannt. Die Länge der Abstandshülse 29, welche den Durchbruch 19 für die Schwenkachse 7 zugeordnet ist, entspricht der vorbestimmten Länge 11 der Schwenkachse 7. Wesentlich für eine einfache, parallele Ausrichtung der Blechschenkel 9 bei ihrer Montage ist nun, dass die Länge der Abstandshülse 29, welche dem Durchbruch 20 für die Drehachse 12 zugeordnet ist, dem Maß des Zwischenraums 21 entspricht, welcher von den Blechschenkeln 9 beim Einfassen der Klinke 13 gebildet wird, wenn diese unter Einfassung der dem Durchbruch 19 zugeordneten Abstandshülse 29 zueinander parallel ausgerichtet sind.

Weiterhin weisen die Blechschenkel 9 einen auf der Spiegelachse 18 gelegenen Durchbruch 27 zur Anbringung einer Achse 30 für eine Schenkelfeder 28 auf. Der Durchbruch 27 liegt zwischen dem Durchbruch 19 für die Schwenkachse 7 und dem Durchbruch 20 für die Drehachse 12. Zur Bildung der Achse 30 für die Schenkelfeder 28 wird eine Spannschraube verwendet, die im zusammengebauten Zustand des Rastkopfes 8 durch die jeweiligen Durchbrüche 27 für die Achse 30 der Schenkelfeder 28 durchführbar ist.

Die Fig.1 bis 3 zeigen, dass die Schenkelfeder 28 einen ersten Schenkel 31 aufweist, mit welchem sie sich auf der Schwenkachse 7 abstützt und einen zweiten Schenkel 32 aufweist, mit welchem sie sich auf einer Unterseite der Klinke 13 abstützt.

Weiterhin zeigen insbesondere die Fig.1 bis 3, dass die Klinke 13 zumindest an einer ihrer von den Blechschenkeln 9 eingefassten Seiten einen nach außen gerichteten Anschlagszapfen 34 aufweist, welcher gegen eine Schmalseite 35 des Blechschenkels 9 gerichtet ist. In der Eingreifstellung 15 liegt die Klinke 13 mit dem Anschlagszapfen 34 gegen eine erste, vorbestimmte Stelle 36 der Schmalseite 35 des Blechschenkels 9 an. Die erste Stelle 36 wir von einer Kehle gebildet. Ausgehend von der Kehle fällt die Schmalseite 35 in Richtung zur Schwenkachse 7 unter einem vorbestimmten Winkel derart ab, dass die Klinke 13 mit dem Anschlagszapfen 34 von der Eingreifstellung 15 in die Entriegelungsstellung 17 verschwenkbar ist, in welche die Klinke 13 mit dem Anschlagszapfen 34 gegen eine zweite, vorbestimmte Stelle 37 der Schmalseite 35 anliegt.

Für ein verkantungsfreies Verschwenken der Klinke 13 weist diese an beiden von den Blechschenkeln 9 eingefassten Seiten den Anschlagszapfen 34 auf. Die Klinke 13 ist ein Gussteil. Um dem Gussteil in etwa gleiche Wandstärken zu geben, weist der Eingreifnoppen 14 eine nach oben offene Mulde auf. An ihrer Unterseite weist die Klinke 13 zudem ein Rippe 44 auf, welche ebenfalls eine Ausbildung einer einheitlichen Wandstärke für die Klinke 13 unterstützt.

Insbesondere die Fig.5 und 7 zeigen, dass die Schwenkachse 7 des Rastkopfes 8 aus der Längsmittelachse 40 des balkenartigen Profils 2 in Richtung zum Ausschnitt 39 unter einem vorbestimmten Versatz 45 versetzt angeordnet ist, um dem Rastkopf 8 eine bevorzugte Schwenkrichtung vorzugeben.

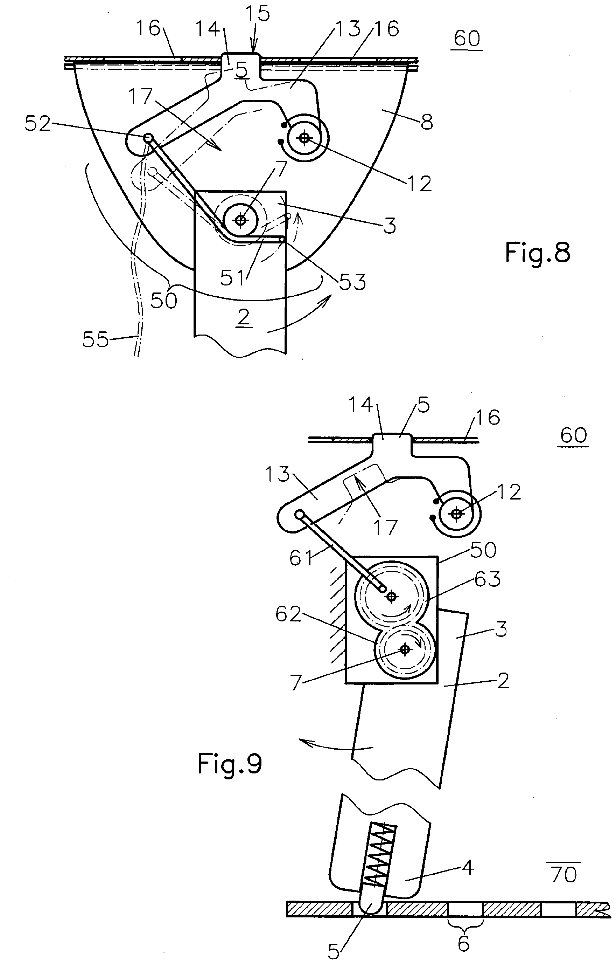

Insbesondere die Fig.8 und 9 zeigen eine erfindungsgemäße Vorrichtung 1 mit einer Koppelvorrichtung 50 zur Betätigung der Klinke 13. Die Vorrichtung 1 dient der Ladungssicherung und ist zwischen dem Deckenbereich 60 und dem Ladebodenbereich 70 eines Lastkraftwagens angeordnet. Im Deckenbereich läuft eine Schiene, innerhalb derer die Vorrichtung 1 beweglich ist.

Derartige Ladungssicherungsvorrichtungen werden auch als Ladebalken bezeichnet.

Sie weisen ein oberes Ende 3 und ein unteres Ende 4 auf.

An beiden Enden 3, 4 weist ein derartiger Ladungssicherungsbalken Rastelemente 5 auf, mit deren Hilfe der Ladebalken in entsprechenden Ausnehmungen, auch als Gegenrastelemente 6 bezeichnet, einrasten kann, um seine Ladungssicherungsfunktion zu übernehmen.

Wie insbesondere Fig.8 zeigt, dies aber auch ohne weiters auf die Darstellung gemäß Fig.9 übertragbar ist, weist das obere Ende 3 des balkenartigen Profils 2 einen Rastkopf 8 auf, der allerdings in Fig.9 weggelassen ist, um die technische Funktion leichter erläutern zu können.

Dieser Rastkopf 8 ist gegenüber dem balkenartigen Profil um die gemeinsame Drehachse 7 verschwenkbar. Zugleich ist am Rastkopf 8 um eine weitere Drehachse 12 eine Klinke 13 schwenkbar gelagert, die unter der Rückstellkraft einer um ihre Drehachse 12 gewundenen Spiralfeder steht. Die rückstellende Feder kann aber auch an anderen Fixpunkten befestigt sein, wichtig ist nur, dass sie sich in ihrer Öffnungsrichtung mit zumindest einem Schenkel an der Klinke 13 abstützt.

Aus diesem Grund wird die Klinke 13 allein durch die Vorspannkraft der gezeigten Feder mit ihrem Rastelement 5, welches von einem Vorsprung gebildet wird, welcher dem Deckenbereich 60 zugeordnet ist, nach außen gedrückt, um in eine entsprechende Öffnung, hier als Gegenrastelement 6 bezeichnet, eingreifen zu können.

Wesentlich ist nun, dass das balkenartige Profil 2 um die Schwenkachse 7 am Rastkopf 8 verschwenkbar ist und dass zwischen dem balkenartigen Profil 2 und der Klinke 13 eine getriebliche Koppelvorrichtung 50 vorgesehen ist, mittels derer eine Schwenkbewegung des Profils 2 um die Schwenkachse 7 zu einer zwangsweisen Verschwenkbewegung der Klinke 13 führt, die entgegen der auf sie wirkenden Federkraft in ihre Endriegelungsstellung 17 führt. Durch diese Maßnahme löst sich der Eingreifnoppen 14 aus der betreffenden Rastausnehmung 16 in der im Deckenbereich 60 befindlichen Rastschiene des Lastkraftwagens und das balkenartige Profil 2 kann dank der ausgerasteten Eingriffsverhältnisse zwischen Eingreifnoppen 14 und Gegenrastelementen 6 entlang der Schiene verschoben werden.

Es ist dabei lediglich um den Winkel schräg zu halten, der erforderlich ist, um über das Zugelement 51 den Eingreifnoppen 14 außer Eingriff mit dem Gegenrastelement 6 zu halten.

Der Unterschied zwischen der Darstellung der Fig.9 und 8 besteht im Wesentlichen darin, dass in Fig.9 die getriebliche Koppelvorrichtung aus einem Zahnradgetriebe gebildet wird, von welchem ein Zahnrad fest, das heißt drehfest mit dem balkenartigen Profil 2 verbunden ist während das andere Zahnrad auf seinem Umfang mit dem ersten Zahnrad kämmt und über eine Pleuelstange 61 mit der Klinke 13 getrieblich verbunden ist um infolge der Verschwenkbewegung des balkenartigen Profils 2 und der mit diesem verbundenen Zahnradscheibe 62, die ihrerseits mit dem beweglich gelagerten Zahnrad 63 kämmt, an welchem auf einem vorbestimmten Radius die Pleuelstange 61 sitzt, eine Zwangsbewegung in die Klinke 13 begleitet wird, die zu einer zwangsweisen Bewegung der des Eingriffsnoppens 14 in die Endriegelungsstellung 17 führt.

In diesem Falle ist die Rückstellfeder 12 nicht unbedingt erforderlich, da in der Senkrechtstellung des balkenartigen Profils 2 die Eingreifnoppen 14 zwangsläufig in die entsprechenden Vertiefungen 16 der Schiene im Deckenbereich 60 eingetaucht sind werden also im Falle der Fig.9 die getriebliche Koppelvorrichtung über eine Pleuelstange realisiert wird, wird im Falle der Fig.8 die getriebliche Koppelvorrichtung von einem Zugelement 51 gebildet, welches zwischen Befestigungsstellen 52 an der Klinke 13 und 53 am Profil 2 eingespannt ist.

Infolge der durch Pfeil angedeuteten Schwenkbewegung im Falle der Fig.8 nach rechts wird das Zugelement 51 gespannt und verschwenkt dabei den entsprechenden Ausleger der Klinke 13 zwangsweise in diejenige Richtung, in welche der Eingreifnoppen 14 aus dem entsprechenden Gegenrastelement 16 austaucht.

Das Zugelement 51 ist zweckmäßiger Weise ein Drahtseil.

Drahtseile sind hochgradig biegeelastisch, und erfüllen ihre Aufgaben völlig problemlos über Jahrzehnte hinweg.

Wie insbesondere Fig.8 zeigt, ist es lediglich erforderlich, dass die zwangsweise Einleitung der Verschwenkbewegung der Klinke 13 in lediglich einer der beiden Schwenkrichtungen des Profils 2 erfolgt.

Ergänzend hierzu kann allerdings, dies ist eine Besonderheit der Erfindung, zusätzlich zu der getrieblichen Koppelvorrichtung 50 noch eine manuelle Koppelvorrichtung 55 vorgesehen sein, die ebenfalls dem Auslösen des Eingriffs zwischen dem Eingreifnoppen 14 und dem Gegenrastelement der zugeordneten Schiene führt.

Dadurch lässt sich erreichen, dass neben einer Schwenkbewegung des Profils 2 der vorgesehenen Richtung auch über eine einfache Zugschnur oder dergleichen die Klinke 13 aus ihrem Eingriff herausgebracht wird, vorteilhafter Weise erfolgt dies so, dass die beiden Zugelemente 51,53 gleichsinnig an der Klinke 13 angreifen, das heißt bei Zugbelastung wird in jedem Fall der Eingreifnoppen 14 aus dem entsprechenden Gegenrastelement herausgelöst.

### Bezugszeichenliste

- 1: Vorrichtung
- 2: Profil
- 3: erstes Ende
- 4: zweites Ende
- 5: Rastelement
- 6: Gegenrastelement
- 7: Schwenkachse
- 8: Rastkopfe
- 9: Blechschenkel
- 10: Seite
- 11: Länge
- 12: Drehachse (13)
- 13: Klinke
- 14: Eingreifnoppen
- 15: Eingreifstellung
- 16: Rastausnehmung
- 17: Entriegelungsstellung
- 18: Spiegelachse
- 19: Durchbruch (7)
- 20: Durchbruch (12)
- 21: Zwischenraum
- 22: Fahrtrichtung
- 23: Vertikalebene
- 24: Längenmaß
- 25: Vorsprungmaß
- 26: Unterkante
- 27: Durchbruch (28)
- 28: Schenkelfeder
- 29: Abstandshülse
- 30: Schenkelfeder-Achse
- 31: erster Schenkel
- 32: zweiter Schenkel
- 33: Oberkante
- 34: Anschlagszapfen
- 35: Schmalseite
- 36: erste Anlagestelle
- 37: zweite Anlagestelle
- 38: Mulde
- 39: Ausschnitt
- 40: Längsmittelachse
- 41: Schienenprofil
- 42: Biegeradius
- 43: Spannschraube
- 44: Rippe
- 45: Versatz
- 50: Koppelvorrichtung
- 51: Zugelement
- 52: Befestigungsstelle
- 53: Befestigungsstelle
- 55: Koppelvorrichtung
- 60: Deckenbereich
- 61: Pleuelstange
- 62: Zahnradscheibe
- 63: Zahnrad
- 70: Ladebodenbereich

## Patentansprüche

1. Vorrichtung (1) zum Sichern von Ladegut, welches sich auf einer Ladefläche eines Fahrzeugs befindet, bestehend aus einem balkenartigen Profil (2) mit einem ersten und einem zweiten Ende (3, 4), wobei die jeweiligen Enden (3, 4) Rastelemente (5) aufweisen, mit welchen sie in Gegenrastelemente (6) arretierbar sind, die dem Fahrzeug zugeordnet sind, wobei zumindest eines der Enden (3, 4) einen um eine Schwenkachse (7) schwenkbaren Rastkopf (8) aufweist, welcher von zwei Blechschenkeln (9) gebildet wird, die mit sich gegenüberliegenden Seiten (10) gegeneinandergerichtet und über eine vorbestimmte Länge (11) der Schwenkachse (7) voneinander beabstandet sind und als dem Rastkopf (8) zugeordnetes Rastelement (5) eine um eine Drehachse (12) drehbare Klinke (13) mit Eingreifnoppen (14) in ihrem Zwischenraum (21) einfassen, welche von einer Eingreifstellung (15), in welcher der Eingreifnoppen (14) in einer als Gegenrastelement (6) ausgeführten Rastausnehmung (16) eingreift, entgegen einer Federkraft in eine aus der Rastausnehmung (16) herausgeführten Entriegelungsstellung (17) verschwenkbar ist, **dadurch gekennzeichnet, dass** die Blechschenkel (9) von Ausstanzteilen gebildet werden, die zunächst einmal flach und bezüglich derjenigen Spiegelachse (18) spiegelsymmetrisch und zueinander deckungsgleich ausgeführt sind, welche in derjenigen quer zur Fahrtrichtung (22) des Fahrzeugs gelegenen Vertikalebene (23) liegt, in welcher auch die Schwenkachse (7) liegt.

2. Vorrichtung (1) nach Anspruch 1, **dadurch gekennzeichnet, dass** jeder Blechschenkel (9) einen ersten, auf der Spiegelachse (18) gelegenen Durchbruch (19) zur Anbringung der Schwenkachse (7) und zwei zweite, außerhalb der Spiegelachse (18) gelegene Durchbrüche (20) aufweist, von denen in der Gebrauchsstellung des Rastkopfes (8) lediglich einer zur Anbringung der Drehachse (12) dient.

3. Vorrichtung (1) nach Anspruch 2, **dadurch gekennzeichnet, dass** die Ausstanzteile zu den Blechschenkeln (9) unter Einnahme einer deckungsgleichen Form fertig gebogen sind, indem sie oberhalb des Durchbruchs (20) zur Anbringung der Drehachse (12) unter einem vorbestimmten Längenmaß (24) entgegen ihrer jeweiligen Seite (10) zu ihrer Oberkante (33) des Ausstanzteils gehend nach außen abgewinkelt sind und im Bereich des Durchbruchs (19) zur Anbringung der Schwenkachse (7) unter einem vorbestimmten Vorsprungmaß (25) entgegen ihrer jeweiligen Seite (10) zur Unterkante (26) des Ausstanzteils (9) gehend nach außen gekröpft sind.

4. Vorrichtung (1) nach Anspruch 3, **dadurch gekennzeichnet, dass** das Längenmaß (24) größer ist, als das Vorsprungmaß (25).

5. Vorrichtung (1) nach einem der Ansprüche 2 bis 4, **dadurch gekennzeichnet, dass** die Blechschenkel (9) mittels zweier Abstandshülsen (29) auf Abstand gehalten werden, welche jeweils einem der Durchbrüche (19, 20) zugeordnet sind, wobei über eine durch den jeweiligen Durchbruch (20) für die Drehachse (12) und dessen zugeordneten Abstandshülse (29) durchführbare Spannschraube (33) miteinander verspannt sind.

6. Vorrichtung (1) nach Anspruch 5, **dadurch gekennzeichnet, dass** die Länge der Abstandshülse (29), welche dem Durchbruch (19) für die Schwenkachse (7) zugeordnet ist, der vorbestimmten Länge (11) der Schwenkachse (7) entspricht.

7. Vorrichtung (1) nach Anspruch 6, **dadurch gekennzeichnet, dass** die Länge der Abstandshülse (29), welche dem Durchbruch (20) für die Drehachse (12) zugeordnet ist, dem Maß des Zwischenraums (21) entspricht, welcher von den Blechschenkeln (9) beim Einfassen der Klinke (13) gebildet wird, wenn diese unter Einfassung der dem Durchbruch (19) zugeordneten Abstandshülse (29) zueinander parallel ausgerichtet sind.

8. Vorrichtung (1) nach einem der Ansprüche 2 bis 7, **dadurch gekennzeichnet, dass** die Blechschenkel (9) einen auf der Spiegelachse (18) gelegenen Durchbruch (27) zur Anbringung einer Achse (30) für eine Schenkelfeder (28) aufweisen, welcher zwischen dem Durchbruch (19) für die Schwenkachse (7) und dem Durchbruch (20) für die Drehachse (12) liegt.

9. Vorrichtung (1) nach Anspruch 8, **dadurch gekennzeichnet, dass** die Schenkelfeder (28) einen ersten Schenkel (31) aufweist, mit welchem sie sich auf der Schwenkachse (7) abstützt und einen zweiten Schenkel (32) aufweist, mit welchem sie sich auf einer Unterseite der Klinke (13) abstützt.

10. Vorrichtung (1) nach einem der Ansprüche 1 bis 9, **dadurch gekennzeichnet, dass** die Klinke (13) zumindest an einer ihrer von den Blechschenkeln (9) eingefassten Seiten einen nach außen gerichteten Anschlagszapfen (34) aufweist, welcher gegen eine Schmalseite (35) des Blechschenkels (9) gerichtet ist, wobei die Klinke (13) in der Eingreifstellung (15) gegen eine vorbestimmte erste Stelle (36) der Schmalseite (35) des Blechschenkels (9) anliegt und in der Entriegelungsstellung (17) gegen eine vorbestimmte zweite Stelle (37) der Schmalseite (35) anliegt.

11. Vorrichtung (1) nach Anspruch 10, **dadurch gekennzeichnet, dass** die Klinke (13) an beiden von den Blechschenkeln (9) eingefassten Seiten den Anschlagszapfen (34) aufweist.

12. Vorrichtung (1) nach einem der Ansprüche 1 bis 11, **dadurch gekennzeichnet, dass** der Eingreifnoppen (14) der Klinke (13) eine nach oben offen Mulde (38) aufweist.

13. Vorrichtung (1) nach einem der Ansprüche 1 bis 12, **dadurch gekennzeichnet, dass** das balkenartige Profil (2) an demjenigen Ende (3, 4), an welchem der Rastkopf (8) befestigt ist, einen zum jeweiligen Ende (3, 4) offenen Ausschnitt (39) aufweist, in welchem der Rastkopf (8) zusammen mit der Klinke (13) einsenkbar ist, wobei die Schwenkachse (7) des Rastkopfes (8) aus der Längsmittelachse (40) des balkenartigen Profils (2) in Richtung zum Ausschnitt (39) unter einem vorbestimmten Versatz (45) versetzt angeordnet ist.

14. Vorrichtung (1) nach einem der Ansprüche 1 bis 13, **dadurch gekennzeichnet, dass** zwischen dem balkenartigen Profil (2) und der Klinke (13) eine getriebliche Koppelvorrichtung (50) vorgesehen ist, mittels derer eine Schwenkbewegung des Profils (2) in die Schwenkachse (7) zu einer zwangsweisen Verschwenkbewegung der Klinke (13) entgegen der auf sie wirkenden Federkraft in ihre Entriegelungsstellung (17) führt.

15. Vorrichtung (1) nach Anspruch 14, **dadurch gekennzeichnet, dass** die getriebliche Koppelvorrichtung (50) von einem Zugelement (51) zwischen Befestigungsstellen (52, 53) an Klinke (13) und Profil (2) gebildet wird, welches in der Gebrauchsstellung ungespannt ist und so verlegt ist, dass mit der Schwenkbewegung des Profils (2) die zwangsweise Verschwenkbewegung der Klinke (13) erfolgt.

16. Vorrichtung (1) nach Anspruch 15, **dadurch gekennzeichnet, dass** das Zugelement (51) ein Drahtseil ist.

17. Vorrichtung (1) nach einem der Ansprüche 14 bis 16, **dadurch gekennzeichnet, dass** die getriebliche Koppelung lediglich in einer der beiden möglichen Schwenkbewegungsrichtungen des Profils (2) erfolgt.

18. Vorrichtung (1) nach einem der Ansprüche 14 bis 17, **dadurch gekennzeichnet, dass** zusätzlich zur getrieblichen Koppelvorrichtung (50) eine manuelle Betätigungsvorrichtung (55) zum Auslösen der, die Verschwenkbewegung der Klinke (13) entgegen der auf sie wirkenden Federkraft in ihre Entriegelungsstellung (17) vorgesehen ist.

19. Vorrichtung (1) nach Anspruch 18, **dadurch gekennzeichnet, dass** die manuelle Betätigungsvorrichtung (55) ebenfalls ein Zugelement (53) ist.

20. Vorrichtung (1) nach Anspruch 19, **dadurch gekennzeichnet, dass** die Zugelemente (51,53) gleichsinnig wirkend an der Klinke (13) angreifen.

## Claims

1. Device (1) for securing cargo which is located on a loading surface of a vehicle, the device consisting of a beam-like profile (2) having a first and a second end (3, 4), the respective ends (3, 4) comprising latching elements (5) by means of which said ends can be locked into counter-latching elements (6) which are associated with the vehicle, at least one of the ends (3, 4) comprising a latching head (8) which can pivot about a pivot shaft (7) and is formed of two sheet-metal legs (9) which are oriented counter to one another so as to have opposing faces (10), are spaced apart from one another by a predetermined length (11) of the pivot shaft (7) and, as the latching element (5) associated with the latching head (8), surround, in the gap (21) between said legs, a pawl (13) which comprises an engagement knob (14), can rotate about a rotational shaft (12) and can be pivoted from an engagement position (15), in which the engagement knob (14) engages in a latching recess (16) designed as a counter-latching element (6), counter to a spring force into an unlocked position (17) which is guided out of the latching recess (16), **characterised in that** the sheet-metal legs (9) are formed from punched parts which are initially flat and designed so as to be congruent with respect to one another and mirror-symmetrical with respect to the mirror axis (18) that lies in the vertical plane (23) which is transverse to the direction (22) of travel of the vehicle and in which the pivot shaft (7) also lies.

2. Device (1) according to claim 1, **characterised in that** each sheet-metal leg (9) comprises a first opening (19) on the mirror axis (18) for attaching the pivot shaft (7) and two second openings (20) outside the mirror axis (18), of which two openings only one is used to attach the rotational shaft (12) when the latching head (8) is in the use position.

3. Device (1) according to claim 2, **characterised in that** the punched parts are ready-bent to form the sheet-metal legs (9), thus assuming a congruent shape, by being angled outwards towards the upper edge (33) thereof of the punched part above the opening (20) in order to attach the rotational shaft (12) at a predetermined length dimension (24) against the relevant face (10) thereof and being cranked outwards towards the lower edge (26) of the punched part (9) in the region of the opening (19) in order to attach the pivot shaft (7) at a predetermined projection dimension (25) against the relevant face (10) thereof.

4. Device (1) according to claim 3, **characterised in that** the length dimension (24) is greater than the projection dimension (25).

5. Device (1) according to any of claims 2 to 4, **characterised in that** the sheet-metal legs (9) are held at a distance by means of two spacer sleeves (29) which are each assigned to one of the openings (19, 20), being clamped together by means of a clamping screw (33) that can be lead through the relevant opening (20) for the rotational shaft (12) and its associated spacer sleeve (29).

6. Device (1) according to claim 5, **characterised in that** the length of the spacer sleeve (29) which is associated with the opening (19) for the pivot shaft (7) corresponds to the predetermined length (11) of the pivot shaft (7).

7. Device (1) according to claim 6, **characterised in that** the length of the spacer sleeve (29) which is associated with the opening (20) for the rotational shaft (12) corresponds to the dimension of the gap (21) formed by the sheet-metal legs (9) when surrounding the pawl (13), if said legs are aligned parallel to one another thus surrounding the spacer sleeve (29) associated with the opening (19).

8. Device (1) according to any of claims 2 to 7, **characterised in that** the sheet-metal legs (9) have an opening (27) on the mirror axis (18) for attaching a shaft (30) for a leg spring (28), which opening is between the opening (19) for the pivot shaft (7) and the opening (20) for the rotational shaft (12).

9. Device (1) according to claim 8, **characterised in that** the leg spring (28) has a first leg (31) by means of which it is supported on the pivot shaft (7), and has a second leg (32) by means of which it is supported on an underside of the pawl (13).

10. Device (1) according to any of claims 1 to 9, **characterised in that** the pawl (13) has an outwardly oriented stop pin (34) at least on one of the faces thereof surrounded by the sheet-metal legs (9), which stop pin is oriented counter to a narrow side (35) of the sheet-metal leg (9), the pawl (13) abutting a predetermined first point (36) of the narrow side (35) of the sheet-metal leg (9) when in the engagement position (15) and abutting a predetermined second point (37) of the narrow side (35) when in the unlocked position (17).

11. Device (1) according to claim 10, **characterised in that** the pawl (13) comprises the stop pin (34) on the two faces surrounded by the sheet-metal legs (9).

12. Device (1) according to any of claims 1 to 11, **characterised in that** the engagement knob (14) of the pawl (13) has a trough (38) that is open at the top.

13. Device (1) according to any of claims 1 to 12, **characterised in that** the beam-like profile (2) has, at the end (3, 4) on which the latching head (8) is fastened, a cutout (39) which is open towards the relevant end (3, 4) and in which the latching head (8) can be sunk together with the pawl (13), the pivot shaft (7) of the latching head (8) being arranged so as to be offset out of the longitudinal central axis (40) of the beam-like profile (2) in the direction of the cutout (39) at a predetermined offset (45).

14. Device (1) according to any of claims 1 to 13, **characterised in that** a geared coupling device (50) is provided between the beam-like profile (2) and the pawl (13), by means of which coupling device a pivoting movement of the profile (2) in the pivot shaft (7) leads to a forced pivoting movement of the pawl (13), counter to the spring force acting on said pawl, into the unlocked position (17) thereof.

15. Device (1) according to claim 14, **characterised in that** the geared coupling device (50) is formed by a tension element (51) between fastening points (52, 53) on the pawl (13) and profile (2), which tension element is untensioned in the use position and is installed such that the forced pivoting movement of the pawl (13) takes place together with the pivoting movement of the profile (2).

16. Device (1) according to claim 15, **characterised in that** the tension element (51) is a wire cable.

17. Device (1) according to any of claims 14 to 16, **characterised in that** the geared coupling takes place only in one of the two possible pivoting movement directions of the profile (2).

18. Device (1) according to any of claims 14 to 17, **characterised in that**, in addition to the geared coupling device (50), a manual actuation device (55) is provided for triggering the pivoting movement of the pawl (13), counter to the spring force acting on said pawl, into the unlocked position (17) thereof.

19. Device (1) according to claim 18, **characterised in that** the manual actuation device (55) is also a tension element (53).

20. Device (1) according to claim 19, **characterised in that** the tension elements (51, 53) act in the same direction on the pawl (13).

## Revendications

1. Dispositif (1) pour sécuriser des marchandises qui se trouvent sur une surface de chargement d'un véhicule, constitué d'un profilé en forme de poutre (2) avec une première et une deuxième extrémité (3, 4), dans lequel les extrémités respectives (3, 4) présentent des éléments d'encliquetage (5) avec lesquels elles peuvent être verrouillées dans des éléments de contre-encliquetage (6) qui sont associés au véhicule, dans lequel au moins une des extrémités (3, 4) présente une tête d'encliquetage (8) qui peut pivoter autour d'un axe de pivotement (7) et qui est formée par deux branches en tôle (9) orientées l'une vers l'autre par des côtés (10) se faisant face et espacées l'une de l'autre sur une longueur prédéterminée (11) de l'axe de pivotement (7) et qui renferment dans leur espace intermédiaire (21), en tant qu'élément d'encliquetage (5) associé à la tête d'encliquetage (8), un loquet (13) présentant une protubérance d'engagement (14) lequel peut tourner autour d'un axe de rotation (12) et pivoter à l'encontre d'une force élastique à partir d'une position d'engagement (15) dans laquelle la protubérance d'engagement (14) est engagée dans un évidement d'encliquetage (16) conçu comme élément de contre-encliquetage (6), dans une position de déverrouillage (17) hors de l'évidement d'encliquetage (16), **caractérisé en ce que** les branches en tôle (9) sont formées par des pièces découpées qui sont planes, congruentes l'une avec l'autre et spéculairement symétriques par rapport à leur axe spéculaire (18) qui se trouve dans le plan vertical (23) transversal à la direction de déplacement (22) du véhicule dans lequel se trouve également l'axe de pivotement (7).

2. Dispositif (1) selon la revendication 1, **caractérisé en ce que** chaque branche en tôle (9) présente une première ouverture (19) pour le montage de l'axe de pivotement (7) laquelle est située sur l'axe spéculaire (18), et deux deuxièmes ouvertures (20) situées en dehors de l'axe spéculaire (18) et dont une seule sert au montage de l'axe de rotation (12) dans la position d'utilisation de la tête d'encliquetage (12).

3. Dispositif (1) selon la revendication 2, **caractérisé en ce que** les pièces découpées sont pliées avec adoption d'une forme congruente pour réaliser les branches de tôle (9) en étant courbées vers l'extérieur au-dessus de l'ouverture (20) pour monter l'axe de rotation (12), d'une longueur prédéterminée (24) à l'encontre de leur côté respectif (10) vers le bord supérieur (33) de la pièce découpée et en étant coudé vers l'extérieur dans la région de l'ouverture (19) pour monter l'axe de pivotement (7) d'une dimension de saillie prédéterminée (25) à l'encontre de leur côté respectif (10) vers le bord inférieur (26) de la pièce découpée (9) .

4. Dispositif (1) selon la revendication 3, **caractérisé en ce que** la longueur (24) est supérieure à la dimension de saillie (25).

5. Dispositif (1) selon l'une des revendications 2 à 4, **caractérisé en ce que** les branches en tôle (9) sont maintenues à distance au moyen de deux douilles d'écartement (29) associées chacune à l'une des ouvertures (19, 20), dans lequel les branches en tôle (9) sont maintenues ensemble par une vis de serrage (33) traversant l'ouverture (20) pour l'axe de rotation (12) et la douille d'écartement (29) qui lui est associée.

6. Dispositif (1) selon la revendication 5, **caractérisé en ce que** la longueur de la douille d'écartement (29) associée à l'ouverture (19) de l'axe de pivotement (7) correspond à la longueur prédéterminée (11) de l'axe de pivotement (7).

7. Dispositif (1) selon la revendication 6, **caractérisé en ce que** la longueur de la douille d'écartement (29) associée à l'ouverture (20) pour l'axe de rotation (12) correspond à la dimension de l'espace intermédiaire (21) formé par les branches en tôle (9) lorsque le loquet (13) est monté entre elles et qu'elles sont orientées parallèlement entre elles avec la douille d'écartement (29) associée à l'ouverture (19) qui est insérée.

8. Dispositif (1) selon l'une des revendications 2 à 7, **caractérisé en ce que** les branches métalliques (9) présentent une ouverture (27) située sur l'axe spéculaire (18) pour le montage d'un axe (30) pour un ressort de torsion (28), laquelle ouverture se situe entre l'ouverture (19) pour l'axe de pivotement (7) et l'ouverture (20) pour l'axe de rotation (12).

9. Dispositif (1) selon la revendication 8, **caractérisé en ce que** le ressort de torsion (28) présente une première branche (31) avec laquelle il prend appui sur l'axe de pivotement (7) et une deuxième branche (32) avec laquelle il prend appui sur une face inférieure du loquet (13).

10. Dispositif (1) selon l'une des revendications 1 à 9, **caractérisé en ce que** le loquet (13) présente sur au moins l'un de ses côtés bordés par les branches en tôle (9), une broche de butée (34) qui est dirigée vers l'extérieur et vers un côté étroit (35) de la branche en tôle (9), dans lequel dans la position d'engagement (15), le loquet (13) est en appui contre un premier emplacement prédéterminé (36) du côté étroit (35) de la branche en tôle (9) et, dans la position de déverrouillage (17), contre un deuxième emplacement prédéterminé (37) du côté étroit (35).

11. Dispositif (1) selon la revendication 10, **caractérisé en ce que** le loquet (13) comporte la broche de butée (34) sur les deux côtés bordés par les branches en tôle (9) .

12. Dispositif (1) selon l'une des revendications 1 à 11, **caractérisé en ce que** la protubérance d'engagement (14) du loquet (13) présente une auge (38) ouverte vers le haut.

13. Dispositif (1) selon l'une des revendications 1 à 12, **caractérisé en ce que** le profilé en forme de poutre (2) présente, à l'extrémité (3, 4) à laquelle la tête d'encliquetage (8) est fixée, une découpe (39) ouverte vers l'extrémité respective (3, 4), dans laquelle peut être abaissée la tête d'encliquetage (8) ensemble avec le loquet (13), l'axe de pivotement (7) de la tête d'encliquetage (8) étant agencé décalé d'un décalage prédéterminé (45) par rapport à l'axe central longitudinal (40) du profilé (2) en forme de poutre dans la direction de la découpe (39).

14. Dispositif (1) selon l'une des revendications 1 à 13, **caractérisé en ce qu'**un dispositif d'accouplement (50) est prévu entre le profilé en forme de poutre (2) et le loquet (13), au moyen duquel un mouvement de pivotement du profilé (2) autour de l'axe de pivotement (7) conduit à un mouvement de pivotement forcé du loquet (13) dans sa position de déverrouillage (17) à l'encontre de la force élastique agissant sur celui-ci.

15. Dispositif (1) selon la revendication 14, **caractérisé en ce que** le dispositif d'accouplement (50) est formé par un élément de traction (51) entre des points de fixation (52, 53) sur le loquet (13) et le profilé (2), lequel élément de traction (51) n'est pas sous tension dans la position d'utilisation et est disposé de manière que le mouvement de pivotement forcé du loquet (13) ait lieu avec le mouvement pivotant du profilé (2) .

16. Dispositif (1) selon la revendication 15, **caractérisé en ce que** l'élément de traction (51) est un câble métallique.

17. Dispositif (1) selon l'une des revendications 14 à 16, **caractérisé en ce que** l'accouplement ne s'effectue que dans l'une des deux directions de pivotement possibles du profilé (2).

18. Dispositif (1) selon l'une des revendications 14 à 17, **caractérisé en ce qu'**est prévu, en plus du dispositif d'accouplement (50), un dispositif d'actionnement manuel (55) pour déclencher le mouvement de pivotement du loquet (13) vers sa position de déverrouillage (17) à l'encontre de la force élastique agissant sur celui-ci.

19. Dispositif (1) selon la revendication 18, **caractérisé en ce que** le dispositif d'actionnement manuel (55) est également un élément de traction (53) .

20. Dispositif (1) selon la revendication 19, **caractérisé en ce que** les éléments de traction (51, 53) agissent dans le même sens sur le loquet (13) .
